# EUROPÄISCHE PATENTSCHRIFT

(11) **EP 3 205 533 B1**
(45) Veröffentlichungstag und Bekanntmachung des Hinweises auf die Patenterteilung: **29.08.2018**
(21) Anmeldenummer: 17155767.1
(22) Anmeldetag: 13.02.2017
(51) Int. Cl.: B60N 2/30, B61D 33/00, B60N 2/005, B60N 2/01, A47C 1/126, A47C 4/00, A47C 3/00, B60N 2/02

(54) **AUFBEWAHRUNGSVORRICHTUNG FÜR EINEN SITZ**
STORAGE DEVICE FOR A SEAT
DISPOSITIF DE RANGEMENT POUR UN SIÈGE

(30) Priorität: 15.02.2016 DE 102016202255
(43) Veröffentlichungstag der Anmeldung: 16.08.2017
(73) Patentinhaber: Bombardier Transportation GmbH, 10785 Berlin (DE)
(72) Erfinder: LANGER, Martin, 1200 Wien (AT); ZOTTL, Alexander, 1130 Wien (AT); ORTHNER, Christoph, 1160 Wien (AT)
(74) Vertreter: Patentanwälte Bressel und Partner mbB

(56) Entgegenhaltungen:
- DE-A1-102008 047 659
- US-A- 1 321 009

## Beschreibung

Die vorliegende Erfindung betrifft eine Aufbewahrungsvorrichtung für einen Sitz, eine Sitzverstauanordnung und ein Schienenfahrzeug, aufweisend einen dieser Gegenstände.

Beim Betrieb von Fahrzeugen, insbesondere Schienenfahrzeugen und vor allem Straßenbahnen, ist es erforderlich, in der Fahrerkabine einen Sitz vorzusehen, der im Falle der Ausbildung und Einweisung von Fahrern dieses Fahrzeuges von einem Fahrlehrer eingenommen wird. Um den Fahrschüler beaufsichtigen zu können, muss sich der Fahrlehrer in der Nähe des Schülers befinden. Daher wird ein Sitz neben dem Fahrersitz in der Fahrerkabine vorgesehen. Üblicherweise sind Fahrlehrersitze je nach dem vorhandenen Bauraum als einfache Klappsitze oder starre Sitze ausgeführt, die häufig nicht über eine Rückenlehne verfügen. Derartige Sitze sind typischerweise an der Rückwand der Fahrerkabine befestigt. Im Allgemeinen steht für den Einbau eines Sitzes mit Rückenlehne für den Fahrlehrer nicht ausreichend Bauraum in der Fahrerkabine zur Verfügung.

Aktuelle Lösungen für einen Zusatzsitz gehen oft von einem zusammenklappbaren Sitz aus, um den Platz im Fahrerstand nicht massiv einzuschränken. Die DE102008047659A1 schlägt einen klappbaren Sitz vor, umfassend ein Haltegestell sowie jeweils eine von dem Haltegestell gehaltene und von einer Gebrauchsstellung zu einer Easy-Exit-Stellung und umgekehrt verschwenkbare Sitzfläche und verschwenkbare Rückenlehne. Die Sitzfläche und die Rückenlehne sind in der Easy-Exit-Stellung jeweils im Wesentlichen parallel zu einer Ebene angeordnet, die sich im Wesentlichen senkrecht zu den entsprechenden Ebenen erstreckt, in denen sich die Sitzfläche und die Rückenlehne in der Gebrauchsstellung befinden.

Solche Falt- oder Klappmechaniken benötigten jedoch auch im unbenutzten Falle einen gewissen Bauraum im Fahrerstand, der nicht immer vorhanden ist.

Die US 1,321,009 zeigt einen Zusatz-Faltsitz für Fahrzeuge, der in einem Verstaufach in einem Vordersitz lagerbar und aus diesem Verstaufach ausziehbar oder ausschwenkbar und anschließend aufklappbar ist, sodass hinter dem Vordersitz ein weiterer Sitz geschaffen wird. Hiermit wird aber das oben angegebene Problem nicht behoben.

Somit liegt der vorliegenden Erfindung die Aufgabe zugrunde, Mittel zu finden, mit denen das vorgenannte Problem behoben werden kann.

Nach einer grundlegenden Idee der Erfindung wird der Zusatzsitz, beispielsweise ein Fahrerlehrersitz, in einer Aufbewahrungskiste verwahrt, die auch als Gehäuse bezeichnet wird. Anders ausgedrückt, ist das Gehäuse Kistenförmig. Die Aufbewahrungskiste kann abseits des Fahrerstandes an einem geeigneten Platz im Schienenfahrzeug positioniert sein. Bei Bedarf kann der Sitz aus der Aufbewahrungskiste entnommen und an einer vorgesehenen Stelle im Fahrerstand montiert werden. Der Sitz ist insbesondere ein Klappsitz, der in einem zusammengeklappten Zustand in der Aufbewahrungskiste verwahrt wird.

Nach einer weiteren grundlegenden Idee der Erfindung ist eine Verschiebemechanik vorgesehen, mit welcher der Sitz auf einfache Art und Weise in das Gehäuse eingeschoben werden kann und mit welcher der Sitz auf einfache Art und Weise aus dem Gehäuse entnommen, insbesondere herausgezogen, werden kann. Es ist damit möglich, dass ein schwerer und unhandlicher Sitz nicht in die Aufbewahrungskiste hineingehoben werden muss, sondern außerhalb der Kiste leicht und einfach mit der Verschiebemechanik verbunden werden kann. Eine besonders geeignete Verschiebemechanik ist ein Teleskopschienensystem.

Die oben gestellte Aufgabe wird insbesondere gelöst mit einer Aufbewahrungsvorrichtung und einer Sitzverstauanordnung gemäß den unabhängigen Ansprüchen. Vorteilhafte Weiterbildungen der Erfindung sind in Unteransprüchen angegeben.

Angegeben wird somit insbesondere eine Aufbewahrungsvorrichtung für einen Sitz, aufweisend
- ein Gehäuse mit einer vorderseitigen Öffnung
- eine an einer Innenseite des Gehäuses verschiebbar gelagerte, aus der vorderseitigen Öffnung herausziehbare Schiene
- eine Haltevorrichtung zum Anbringen und Halten eines Sitzes, welche an der Schiene ausgebildet oder angebracht und mit dieser zusammen aus dem Gehäuse heraus und in das Gehäuse hinein verschiebbar ist und welche Mittel zum Anbringen des Sitzes aufweist, sodass ein an die Haltevorrichtung angebrachter Sitz aus dem Gehäuse herausziehbar und in das Gehäuse einschiebbar ist.

Mit der Erfindung werden in ihrer allgemeinen oder in weiteren, noch beschriebenen speziellen Ausführungsformen einer oder mehrere der folgenden Vorteile erzielt:
- Durch die herausziehbare Schiene wird eine Linearführung bereitgestellt, die zum einfachen Einfahren und Ausfahren des Sitzes dient. Hierdurch wird eine Bedienung mit geringem Kraftbedarf ermöglicht und eine sehr gute Bedienbarkeit durch eine freie Zugänglichkeit erreicht.
- Das Gehäuse, vorzugsweise selbsttragend, kann sehr klein dimensioniert werden, da keine Bewegungsfreiräume für händische Manipulation im Innenraum des Gehäuses benötigt werden.
- Das Gehäuse ist idealerweise in einem Bereich nahe dem Fahrerstand unterbringbar, um einen kurzen Transportweg zu ermöglichen. Besonders geeignet ist der Bereich eines Sondernutzungsplatzes, insbesondere hinter einer Prallplatte für einen Rollstuhlfahrer.
- Ermöglicht wird eine komfortable Bedienungshöhe zum Ein- und Ausladen des Sitzes durch entsprechende Anbringung des Gehäuses in geeigneter Höhe, mit Abstand zu einem Boden des Schienenfahrzeugs.
- Ermöglicht wird ein klapperfreier Lagerungszustand des Sitzes, wenn dieser nicht benutzt wird.
- Da ein Zusatzsitz in einem Führerstand nur zeitweise und an sich relativ wenig gebraucht wird, kann durch die Erfindung Platz im Fahrerstand gewonnen werden bzw. ein Fahrerstand kleiner dimensioniert werden. Wird der Sitz nicht benötigt, kann er auf einfache Weise entfernt und verstaut werden.

Genannte herausziehbare Schiene kann insbesondere eine Teleskopschiene oder ein Teil einer Teleskopschienenführung sein. Eine Teleskopschienenführung weist insbesondere genannte herausziehbare Schiene auf und eine weitere Schiene, die auf der Innenseite des Gehäuses ortsfest angebracht ist und zwecks Linearführung mit der herausziehbaren Schiene zusammenwirkt. Genannte Schienen können als Profilschienen ausgebildet sein. Die Profile der Profilschienen laufen insbesondere ineinander. Teleskopschienen können eine Wälz- oder Gleitführung aufweisen.

Die genannte Haltevorrichtung zum Anbringen und Halten eines Sitzes kann relativ zu der herausziehbaren Schiene unbeweglich sein. Beispielsweise ist die Haltevorrichtung mit der herausziehbaren Schiene verschraubt. Das Anbringen und Halten eines Sitzes in der Haltevorrichtung kann auf verschiedene Art und Weise erfolgen. Der Sitz kann insbesondere in die Haltevorrichtung eingehängt werden oder auf die Haltevorrichtung aufgelegt und befestigt werden.

Genannte Mittel zum Anbringen des Sitzes können jegliche Mittel sein, die zur Herstellung einer manuell lösbaren Verbindung zwischen Sitz und Haltevorrichtung geeignet sind. Die Mittel zum Anbringen des Sitzes können Mittel zur Herstellung einer formschlüssigen Verbindung sein. Der Sitz kann weitere Mittel aufweisen, die mit den Mitteln an der Haltevorrichtung formschlüssig zusammenwirken, um eine Verbindung zwischen Haltevorrichtung und Sitz herzustellen.

In einer Ausführungsform ist die Haltevorrichtung plattenförmig ausgebildet.

In einer Ausführungsform weist das Gehäuse einen Deckel auf, mit dem die vorderseitige Öffnung verschließbar ist. Der Deckel kann mit einem oder mehreren Scharnieren am Gehäuse angelenkt sein. Weiterhin kann eine Verschließvorrichtung vorgesehen sein, insbesondere ein Schloss, mit welchem der Deckel verschließbar ist.

Das Gehäuse weist insbesondere ein Höhe-zu-Breite-Verhältnis von gleich oder größer als 3 : 1 auf.

In einer Ausführungsform weist die Aufbewahrungsvorrichtung ein Arretiermittel auf, mit dem die Schiene und/oder die Haltevorrichtung in einer eingeschobenen Position und/oder in einer herausgezogenen Position arretierbar ist. Die eingeschobene Position ist vorzugsweise eine vollständig eingeschobene Position. Die herausgezogene Position ist vorzugsweise eine vollständig herausgezogene Position. Die herausgezogene Position dient zum Anbringen oder Abnehmen des Sitzes an die Haltevorrichtung bzw. von der Haltevorrichtung. Das Arretiermittel ist ein manuell lösbares Arretiermittel. Bevorzugt ist das Arretiermittel in die herausziehbare Schiene oder die Haltevorrichtung einrastbar.

In einer Ausführungsform weist die Haltevorrichtung oder die Schiene einen Griff auf, um die Haltevorrichtung zu verschieben. Unter einem Griff wird jedes manuell (ein)greifbare Mittel verstanden. Ein Griff kann im speziellen Fall somit auch ein Eingriff sein, beispielsweise ein Loch oder eine Mulde. Mit genanntem Griff ist die Schiene bzw. die Haltevorrichtung leicht aus dem Gehäuse herausziehbar und umgekehrt wieder hereinschiebbar.

In einer Ausführungsform weist die Haltevorrichtung eine Abstützung auf, mit der ein Verkippen des Sitzes im angebrachten Zustand, wenn also der Sitz in der Haltevorrichtung angebracht ist, verhinderbar ist. Diese Ausführungsform ist insbesondere dann vorteilhaft, wenn ein Sitz an die Haltevorrichtung angehängt wird und aufgrund seiner Masse bzw. eines erzeugten Drehmoments seitlich verkippen könnte.

In einer Ausführungsform weist das Gehäuse außenseitig Mittel zur Befestigung an einer Wand oder an einer Halterung auf. Mit solchen Befestigungsmitteln ist das Gehäuse insbesondere in einem Innenraum eines Schienenfahrzeugs befestigbar, beispielsweise an einer Wand oder an einer oder mehreren Stangen.

In einer weiteren Ausführungsform ist das Gehäuse ein selbsttragendes Gehäuse. Hierunter wird ein Gehäuse verstanden, das eine Eigensteifigkeit bzw. eine Resistenz gegen Verformung unter den üblichen Nutzungsbedingungen aufweist. Insbesondere kann ein selbsttragendes Gehäuse Zug- und Stoßkräfte aufnehmen.

Ein bevorzugtes Material für das Gehäuse ist ein Kunststoff, insbesondere ein Glasfaserverstärkter Kunststoff.

In einem weiteren Aspekt betrifft die Erfindung eine Sitzverstauanordnung, aufweisend eine Aufbewahrungseinrichtung, wie vorangehend beschrieben, und weiterhin einen Sitz, der an der Haltevorrichtung der Aufbewahrungsvorrichtung angebracht ist. Es kann in der Sitzverstauanordnung jegliche Aufbewahrungseinrichtung in beliebiger Ausführungsform oder Kombination von Ausführungsformen eingesetzt werden, wie vorangehend beschrieben.

Der Sitz ist insbesondere ein Klappsitz, der in einem eingeklappten Zustand in das Gehäuse hineinschiebbar ist bzw. hineingeschoben ist oder in dem eingeklappten Zustand aus dem Gehäuse herausziehbar ist.

Der Sitz kann vorangehend bereits genannte Mittel zum Anbringen aufweisen, die mit Mitteln zum Anbringen einer Haltevorrichtung zusammenwirken können, sodass der Sitz an der Haltevorrichtung befestigt werden kann. Mittel, die an dem Sitz vorgesehen sind, um diesen an der Haltevorrichtung anzubringen, können alternativ dazu verwendet werden, den Sitz in einem Fahrerstand anzubringen.

Unter einem Klappsitz wird jeglicher Sitz verstanden, der zwei zueinander klappbare Teile aufweist. Der Sitz weist zumindest eine Sitzfläche auf. Zusätzlich kann eine klappbare Rückenlehne vorhanden sein. Ein klappbares Teil kann alternativ oder zusätzlich eine klappbare Platte sein, die zur Wandbefestigung dient, ohne dass eine Rückenlehne vorhanden sein muss.

In der Sitzverstauanordnung kann das Gehäuse so klein dimensioniert sein, dass ein Klappsitz im eingeklappten Zustand das Gehäuse im Wesentlichen ausfüllt, wenn er in das Gehäuse hinein geschoben ist. Das Gehäuse kann somit besonders klein und damit platzsparend dimensioniert sein, sodass es im Innenraum eines Fahrzeugs sehr wenig Raum einnimmt. Die kleine Bauweise wird dadurch ermöglicht, dass eine vorangehend schon beschriebene Haltevorrichtung zum Anbringen und Halten des Sitzes mit einer Schiene zusammen aus dem Gehäuse heraus und in das Gehäuse hinein verschiebbar ist. Anders ausgedrückt, wird die kleine Bauweise des Gehäuses dadurch ermöglicht, dass der Sitz mit genannter Schiene in das Gehäuse einschiebbar bzw. aus dem Gehäuse herausziehbar ist.

In einem weiteren Aspekt betrifft die Erfindung ein Schienenfahrzeug, aufweisend eine Aufbewahrungsvorrichtung, wie vorangehend beschrieben, oder eine Sitzverstauanordnung, wie vorangehend beschrieben.

In dem Schienenfahrzeug kann das Gehäuse der Aufbewahrungsvorrichtung oder der Sitzverstauanordnung mit vorangehend genannten Mitteln zur Befestigung an einer Wand oder an einer Halterung befestigt sein. Vorzugsweise ist das Gehäuse mit Abstand zu einem Boden des Schienenfahrzeugs befestigt.

Die Aufbewahrungsvorrichtung oder Sitzverstauanordnung ist insbesondere im Bereich eines Sondernutzungsplatzes des Schienenfahrzeugs angebracht.

Das Schienenfahrzeug ist insbesondere eine Straßenbahn, eine S-Bahn, eine U-Bahn, ein Nahverkehrszug oder ein Fernverkehrszug. Besonders bevorzugt ist eine Straßenbahn.

Nachfolgend wird die Erfindung anhand von Ausführungsbeispielen beschrieben. Es zeigen:
- Fig. 1: eine Aufbewahrungsvorrichtung mit geschlossenem Gehäuse,
- Fig. 2: die Aufbewahrungsvorrichtung nach Fig. 1 mit geöffnetem Gehäuse,
- Fig. 3: die Ansicht aus Fig. 2, wobei in dem Gehäuse ein Klappsitz verstaut ist,
- Fig. 4: eine Detailansicht eines Arretiermittels,
- Fig. 5: die Aufbewahrungsvorrichtung mit aus dem Gehäuse herausgezogener Schiene und Haltevorrichtung,
- Fig. 6: die Ansicht aus Fig. 5, wobei in die Haltevorrichtung ein Klappsitz eingehängt ist, und
- Fig. 7: die Ansicht aus Fig. 6 von einer anderen Seite.

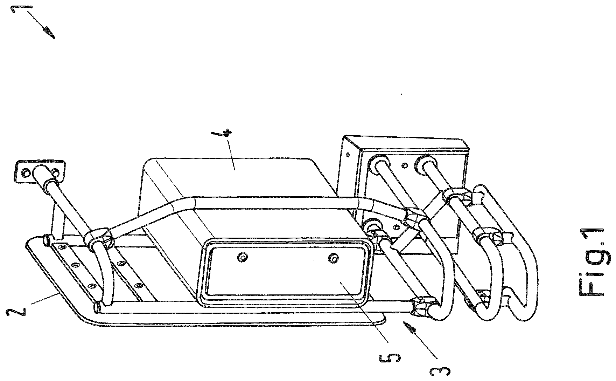

Die Aufbewahrungsvorrichtung 1 in Fig. 1 ist an einem Sondernutzungsplatz hinter einer Prallplatte 2 für einen Rollstuhlfahrer an dem Gestänge 3 angebracht. Das Gehäuse 4 ist mit dem Deckel 5 verschlossen. Das Gehäuse 4 weist hier nicht dargestellte Befestigungsmittel zur Befestigung in dem Gestänge 3 auf. Das Gehäuse ist mit Abstand zu einem nicht dargestellten Boden des Schienenfahrzeugs angebracht.

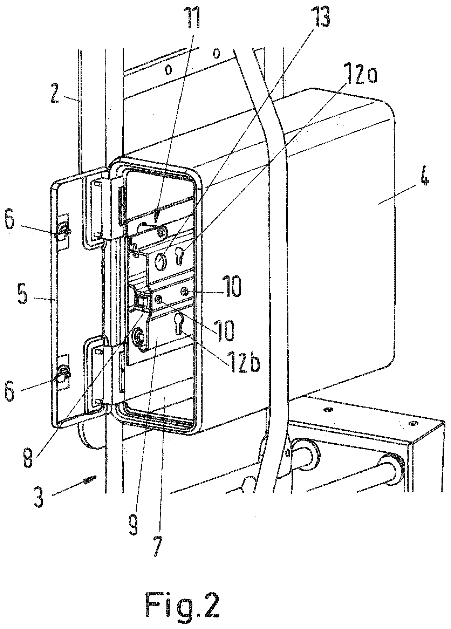

In Fig. 2 ist der Deckel 5 geöffnet und die vordere Öffnung 7 des Gehäuses freigegeben. An dem Deckel 5 sind die Schlösser 6 angebracht.

Der Blick des Betrachters fällt durch die vordere Öffnung 7 ins Innere des Gehäuses 4. Zu sehen sind die an einer Innenseite des Gehäuses 4 befestigte Schiene 8 und die Haltevorrichtung 9 in Form eines Profilbleches, das an der Schiene 8 mittels Schraubverbindungen 10 befestigt ist.

Die Schiene 8 und die Haltevorrichtung 9 werden mit dem Arretiermittel 11 in der gezeigten Position gehalten. Das Arretiermittel 11 wird nachfolgend noch genauer beschrieben.

In der plattenförmigen Haltevorrichtung 9 sind Mittel 12a, 12b zum Anbringen eines Sitzes vorgesehen, die hier als schlüssellochförmige Löcher ausgebildet sind, also als eine Kombination aus Rundloch und Langloch. Weitere dieser Löcher sind vorhanden, in der Ansicht der Fig. 2 aber durch die Gehäusewand verdeckt.

Weiterhin ist in der Haltevorrichtung 9 ein Griff 13 in Form eines Rundloches vorgesehen. In das Loch 13 mit etwa 40 mm Durchmesser kann auf einfache Art und Weise mit einem Finger eingegriffen werden, um die Schiene 8 und die Haltevorrichtung 9 aus dem Gehäuse 4 herauszuziehen.

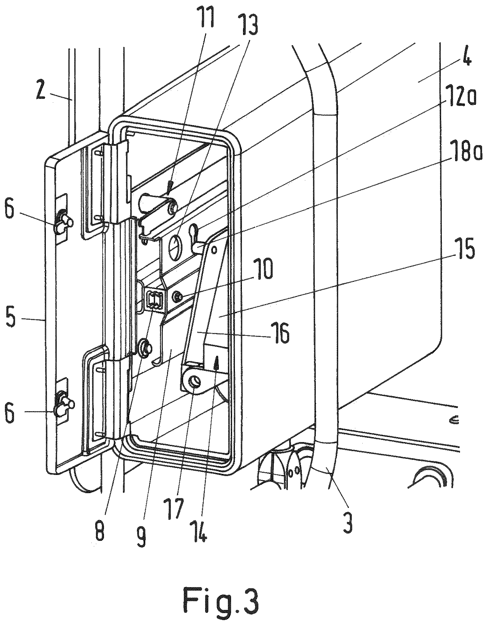

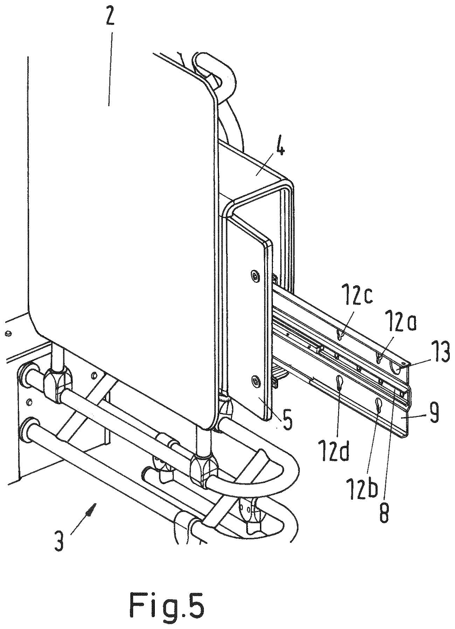

Fig. 3 zeigt die gleiche Ansicht wie Fig. 2. Die Bezugszeichen sind entsprechend gewählt. Im Unterschied zu Fig. 2 ist in Fig. 3 an dem profilförmigen Halteblech 9 der Klappsitz 14 angebracht. Der Klappsitz 14 weist das Sitzteil 15 und die klappbare Halterung in Form einer dickwandigen Halteplatte 16 auf. Die Halteplatte 16 ist über das Gelenk 17 mit dem Sitzteil 15 verbunden und Sitzteil 15 und Halteplatte 16 sind gegeneinander klappbar, wie in Fig. 3 gezeigt. An der Halteplatte 16 sind Befestigungsmittel 18 angebracht, von denen her ein Befestigungsmittel 18a in Form eines Bolzens gezeigt ist. Der Bolzen 18a weist eine Ringnut auf, die mit dem Langlochteil des schlüssellochförmigen Loches 12a in Eingriff gelangt. Ein entsprechender weiterer Befestigungsbolzen greift in das in Fig. 2 gezeigte Loch 12b ein, ist hier aber durch die Platte 16 verdeckt. Zum Einhängen des Sitzes 14 wird der Bolzen 18a zuerst durch den Rundlochteil des Loches 12a geschoben und anschließend nach unten in den Langlochteil bewegt. Entsprechend funktioniert die Befestigung mit weiteren Befestigungsbolzen 18 in weiteren Löchern 12. Zum Einhängen des Sitzes 14 werden die Schiene 8 und das Halteblech 9 aus dem Gehäuse 4 herausgezogen, wie in Fig. 5 gezeigt.

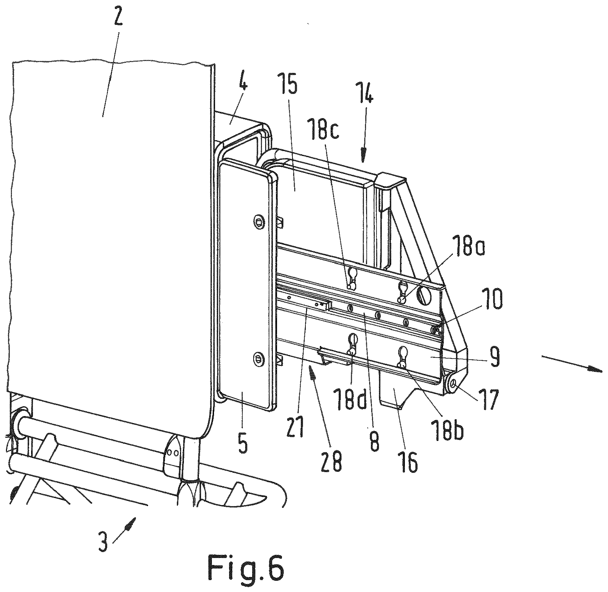

In Fig. 5 sind in dem Halteblech 9 die vier Befestigungslöcher 12a, 12b, 12c, 12d zusehen. Der Sitz 14 weist entsprechend vier Befestigungsbolzen 18a, 18b, 18c, 18d auf, die in Fig. 6 gezeigt sind und in die entsprechenden Löcher 12 eingehängt werden.

Zum Einführen des Sitzes 14 in das Gehäuse 4 werden also zunächst die Schiene 8 und das Halteblech 9 aus dem Gehäuse herausgezogen, anschließend der Sitz 14 in das Halteblech 9 eingehängt, wie in Fig. 6 dargestellt, und anschließend werden Schiene 8 und das halteblech 9 mit eingehängtem Sitz in das Gehäuse 4 hineinverschoben. Beim Entnehmen des Sitzes 14 aus dem Gehäuse 4 wird in umgekehrter Reihenfolge vorgegangen. Durch Anbringen des Gehäuses 4 in passender Höhe werden ein problemloses Einhängen des Sitzes 14 im ausgezogenen Zustand und ein komfortables Hineinschieben in das Gehäuse 4 ermöglicht. Zur Verbesserung der Zugänglichkeit ist die Öffnung 7 im Gehäuse seitlich gewählt.

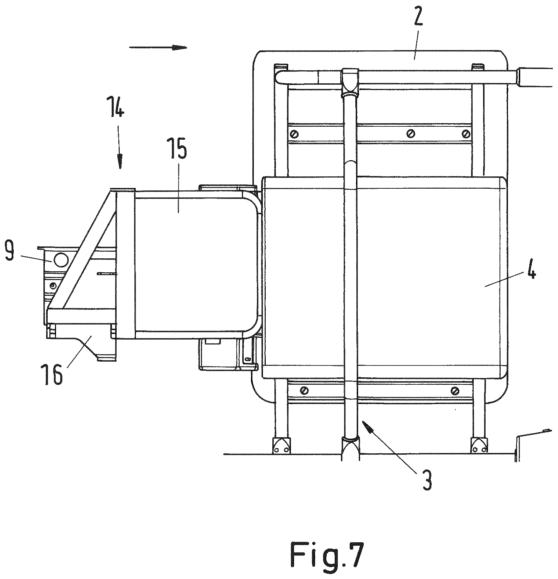

Fig. 7 zeigt den Aufbau der Fig. 6 von der Rückseite. Der Sitz 14 wird in Richtung des dargestellten Falls in das Gehäuse 4 hineinverschoben.

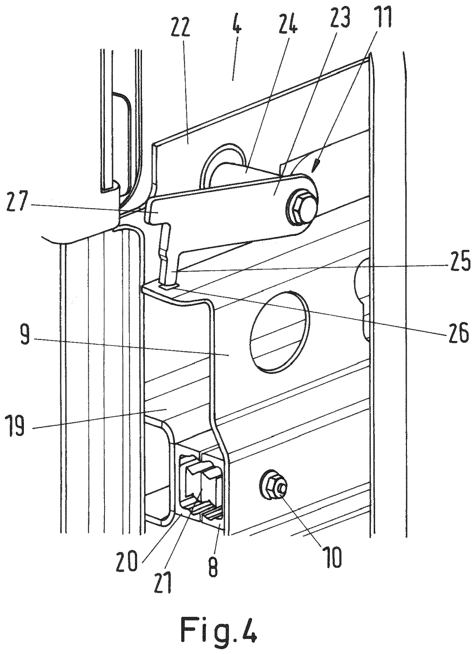

Fig. 4 zeigt eine Detailansicht des Verschiebemechanismus und eines Arretiermittels. An der Innenwand des Gehäuses 4 ist das Profilteil 19 befestigt. Auf dem Profilteil 19 ist eine erste Teleskopschiene 20 befestigt, die C-förmig ausgebildet ist und nicht verschiebbar ist. Die Schiene 20 umgreift die relativ dazu verschiebbare Zwischenschiene 21, die zweiteilig ausgeführt ist (zwei fest verbundene Teile) und welche wiederum von der Schiene 8 umgriffen wird. Die relative Bewegung der Schienen zueinander beim Herausziehen des Halteblechs 9 und der Schiene 8 ist auch in Fig. 6 dargestellt, wo die Schiene 21 ebenfalls gezeigt ist.

Das Profilblech 19 weist einen nach oben auslaufenden Teil 22 auf, der an der Gehäuseinnenwand anliegt und eine Verstärkung im Bereich des Arretiermittels 11 ausbildet. Das Arretiermittel 11 weist den drehbeweglich gelagerten Arm 23 auf, der über den Drehbolzen 24 drehbeweglich an dem Gehäuse 4 gelagert ist. Vorgesehen ist ein Drehfedermechanismus, der hier nicht dargestellt ist. Der Arretierarm 23 weist die Nase 25 auf, die in eine Öffnung 26 in dem Halteblech 9 einrastet und so das Halteblech 9 in der eingefahrenen hier gezeigten Position arretiert. Eine weitere Öffnung, analog zu Öffnung 26, kann in dem Halteblech 9 vorgesehen sein, um das Halteblech 9 in einer ausgezogenen Position, wie in Fig. 6 und 7 gezeigt, zu arretieren. Der Arretierarm 23 kann gegen die Kraft der hier nicht gezeigten Drehfeder nach oben geschwenkt werden, um die Nase 25 aus der Öffnung 26 herauszuheben, wie in Fig. 4 gezeigt. Zur manuellen Betätigung des Armes 23 ist die nach vorne vorspringende Nase 27 vorgesehen, die leicht manuell angehoben werden kann.

In Fig. 6 ist auf der Unterseite des Haltebleches 9 die Abstützung 28 gezeigt, die wannenförmig ausgebildet ist und eine Unterkante des Sitzes 14 umgreift. Dadurch wird ein Verkippen des Sitzes 14 um eine Drehachse, die parallel zur Auszugsrichtung ist (Auszugsrichtung ist in Fig. 6 mit einem Pfeil gekennzeichnet), verhindert. Die Abstützung 28 ist zusammen mit dem Blech 9 und der Schiene 8 ausziehbar. Ein Verkippen des Sitzes 14 relativ zu dem Blech 9 ist an sich durch die eingerasteten Bolzen 18a-d verhindert. Durch das Gewicht des Sitzes 14 ist es jedoch möglich, dass die gesamte Verschiebemechanik verdreht wird, also auch das Blech 9 und die Schiene 8. Dies wird durch die Abstützeinrichtung 28 wirksam verhindert.

### Bezugszeichenliste

- 1: Aufbewahrungsvorrichtung
- 2: Prallplatte
- 3: Gestänge
- 4: Gehäuse
- 5: Deckel
- 6: Schlösser
- 7: Öffnung
- 8: Schiene
- 9: Haltevorrichtung
- 10: Schraubverbindung
- 11: Arretiermittel
- 12a-d: Löcher
- 13: Griff
- 14: Klappsitz
- 15: Sitzteil
- 16: Halteplatte
- 17: Gelenk
- 18a-d: Befestigungsbolzen
- 19: Profilteil
- 20: Schiene
- 21: Zwischenschiene
- 22: auslaufender Teil
- 23: Arretierarm
- 24: Drehbolzen
- 25: Nase
- 26: Öffnung
- 27: Nase
- 28: Abstützeinrichtung

## Patentansprüche

1. Aufbewahrungsvorrichtung (1) für einen Sitz (14), aufweisend
- ein Gehäuse (4) mit einer vorderseitigen Öffnung (7)
- eine an einer Innenseite des Gehäuses verschiebbar gelagerte, aus der vorderseitigen Öffnung herausziehbare Schiene (8)
- eine Haltevorrichtung (9) zum Anbringen und Halten eines Sitzes, insbesondere eines Klappsitzes, welche an der Schiene ausgebildet oder angebracht und mit dieser zusammen aus dem Gehäuse heraus und in das Gehäuse hinein verschiebbar ist und welche Mittel (12a, 12b) zum Anbringen des Sitzes aufweist, sodass ein an die Haltevorrichtung angebrachter Sitz aus dem Gehäuse herausziehbar und in das Gehäuse einschiebbar ist.

2. Aufbewahrungsvorrichtung nach Anspruch 1, wobei das Gehäuse einen Deckel (5) aufweist, mit dem die vorderseitige Öffnung verschließbar ist.

3. Aufbewahrungsvorrichtung nach einem der vorangehenden Ansprüche, aufweisend ein Arretiermittel (11), mit dem die Schiene und/oder die Haltevorrichtung in einer eingeschobenen Position und/oder in einer herausgezogenen Position arretierbar ist.

4. Aufbewahrungsvorrichtung nach einem der vorangehenden Ansprüche, wobei die Haltevorrichtung oder die Schiene einen Griff (13) aufweist, um die Haltevorrichtung zu verschieben.

5. Aufbewahrungsvorrichtung nach einem der vorangehenden Ansprüche, wobei die Haltevorrichtung eine Abstützung (28) aufweist, mit der ein Verkippen des Sitzes im angebrachten Zustand verhinderbar ist.

6. Aufbewahrungseinrichtung nach einem der vorangehenden Ansprüche, wobei das Gehäuse außenseitig Mittel zur Befestigung an einer Wand oder einer Halterung aufweist.

7. Aufbewahrungseinrichtung nach einem der vorangehenden Ansprüche, wobei das Gehäuse ein selbsttragendes Gehäuse ist.

8. Sitzverstauanordnung, aufweisend
- eine Aufbewahrungsvorrichtung, aufweisend
i) ein Gehäuse mit einer vorderseitigen Öffnung
ii) eine an einer Innenseite des Gehäuses verschiebbar gelagerte, aus der vorderseitigen Öffnung herausziehbare Schiene
iii) eine Haltevorrichtung zum Anbringen und Halten eines Sitzes, welche an der Schiene angebracht und mit dieser verschiebbar ist
- einen Sitz, der an die Haltevorrichtung angebracht ist, sodass er von dieser Haltevorrichtung abnehmbar ist, und der zusammen mit der Haltevorrichtung in das Gehäuse hineinschiebbar ist oder aus dem Gehäuse herausziehbar ist.

9. Sitzverstauanordnung nach Anspruch 8, wobei der Sitz ein Klappsitz ist in einem eingeklappten Zustand in das Gehäuse hineinschiebbar ist und aus dem Gehäuse herausziehbar ist.

10. Sitzverstauanordnung nach Anspruch 9, wobei das Gehäuse so klein dimensioniert ist, dass der Sitz im eingeklappten Zustand das Gehäuse im Wesentlichen ausfüllt, wenn er in das Gehäuse hinein geschoben ist.

11. Schienenfahrzeug, aufweisend eine Aufbewahrungsvorrichtung nach einem der Ansprüche 1-7 oder eine Sitzverstauanordnung nach einem der Ansprüche 8-10.

12. Schienenfahrzeug nach Anspruch 11, wobei das Gehäuse der Aufbewahrungsvorrichtung oder der Sitzverstauanordnung mit Mitteln zur Befestigung an einer Wand oder an einer Halterung in dem Schienenfahrzeug befestigt ist.

13. Schienenfahrzeug nach Anspruch 12, wobei das Gehäuse mit Abstand zu einem Boden des Schienenfahrzeugs befestigt ist.

## Claims

1. A storage device (1) for a seat (14), comprising
- a housing (4) having a front-side opening (7)
- a rail (8), which is mounted displaceable on an inner side of the housing and which can be pulled out from the front-side opening
- a holding device (9) for mounting and holding a seat, in particular a folding seat, which holding device is formed or mounted on the rail and is displaceable together therewith out of the housing and into the housing and has means (12a, 12b) for mounting the seat, such that a seat mounted on the holding device can be pulled out of the housing and pushed into the housing.

2. The storage device according to claim 1, wherein the housing has a cover (5), by means of which the front-side opening can be closed.

3. The storage device according to any one of the preceding claims, comprising a locking means (11), by means of which the rail and/or the holding device can be locked in an inserted position and/or in a pulled-out position.

4. The storage device according to any one of the preceding claims, wherein the holding device or the rail has a handle (13) in order to displace the holding device.

5. The storage device according to any one of the preceding claims, wherein the holding device has a support (28), by means of which the seat can be prevented from tilting in the mounted state.

6. The storage device according to any one of the preceding claims, wherein the housing has means, externally, for fastening to a wall or a mount.

7. The storage device according to any one of the preceding claims, wherein the housing is a self-supporting housing.

8. A seat-stowing arrangement, comprising
- a storage device comprising
i) a housing having a front-side opening
ii) a rail, which is mounted displaceable on an inner side of the housing and which can be pulled out from the front-side opening
iii) a holding device for mounting and holding a seat, which holding device is mounted on the rail and is displaceable together therewith
- a seat which is mounted on the holding device such that it can be removed from this holding device and together with the holding device can be pushed into the housing or pulled out of the housing.

9. The seat-stowing arrangement according to claim 8, wherein the seat is a folding seat and in the folded state can be pushed into the housing and pulled out of the housing.

10. The seat-stowing arrangement according to claim 9, wherein the housing is made so small that the seat in the folded stated substantially fills the housing when it is pushed into the housing.

11. A rail vehicle, comprising a storage device according to any one of claims 1-7 or a seat-stowing arrangement according to any one of claims 8-10.

12. The rail vehicle according to claim 11, wherein the housing of the storage device or the seat-stowing arrangement is fastened by fastening means to a wall or to a mount in the rail vehicle.

13. The rail vehicle according to claim 12, wherein the housing is fastened to a floor of the rail vehicle at a distance.

## Revendications

1. Dispositif de rangement (1) pour un siège (14), présentant
- un boîtier (4) avec une ouverture avant (7)
- un rail (8) extractible de l'ouverture avant, logé de manière déplaçable au niveau d'une face intérieure du boîtier
- un dispositif de retenue (9) pour monter et retenir un siège, en particulier un siège rabattable, qui est réalisé ou monté au niveau du rail et peut être déplacé conjointement avec celui-ci hors du boîtier et dans le boîtier et qui présente des moyens (12a, 12b) de montage du siège, si bien qu'un siège monté au niveau du dispositif de retenue est extractible du boîtier et insérable dans le boîtier.

2. Dispositif de rangement selon la revendication 1, dans lequel le boîtier présente un couvercle (5), avec lequel l'ouverture avant peut être fermée.

3. Dispositif de rangement selon l'une quelconque des revendications précédentes, présentant un moyen d'arrêt (11), avec lequel le rail et/ou le dispositif de retenue peut être arrêté dans une position insérée et/ou dans une position extraite.

4. Dispositif de rangement selon l'une quelconque des revendications précédentes, dans lequel le dispositif de retenue ou le rail présente une poignée (13) pour déplacer le dispositif de retenue.

5. Dispositif de rangement selon l'une quelconque des revendications précédentes, dans lequel le dispositif de retenue présente un appui (28), avec lequel un basculement du siège à l'état monté peut être évité.

6. Dispositif de rangement selon l'une quelconque des revendications précédentes, dans lequel le boîtier présente côté extérieur des moyens de fixation à une paroi ou à un support.

7. Dispositif de rangement selon l'une quelconque des revendications précédentes, dans lequel le boîtier est un boîtier autoporteur.

8. Ensemble rangement de siège, présentant
- un dispositif de rangement, présentant
i) un boîtier avec une ouverture avant
ii) un rail extractible de l'ouverture avant, logé de manière déplaçable au niveau d'une face intérieure du boîtier
iii) un dispositif de retenue pour monter et retenir un siège, qui est monté au niveau du rail et déplaçable avec celui-ci
- un siège, qui est monté au niveau du dispositif de retenue, de sorte à pouvoir être enlevé de ce dispositif de retenue et qui est insérable dans le boîtier ou extractible du boîtier conjointement avec le dispositif de retenue.

9. Ensemble rangement de siège selon la revendication 8, dans lequel le siège est un siège rabattable qui à l'état replié est insérable dans le boîtier et extractible du boîtier.

10. Ensemble rangement de siège selon la revendication 9, dans lequel le boîtier est dimensionné aussi petit que le siège à l'état replié remplit sensiblement le boîtier, lorsqu'il est poussé dans le boîtier.

11. Véhicule ferroviaire, présentant un dispositif de rangement selon l'une quelconque des revendications 1-7 ou un ensemble rangement de siège selon l'une quelconque des revendications 8-10.

12. Véhicule ferroviaire selon la revendication 11, dans lequel le boîtier du dispositif de rangement ou de l'ensemble rangement de siège est fixé avec des moyens de fixation à une paroi ou à un support dans le véhicule ferroviaire.

13. Véhicule ferroviaire selon la revendication 12, dans lequel le boîtier est fixé à distance d'un plancher du véhicule ferroviaire.
